# EUROPÄISCHE PATENTSCHRIFT

(11) **EP 1 120 633 B1**
(45) Veröffentlichungstag und Bekanntmachung des Hinweises auf die Patenterteilung: **09.01.2008**
(21) Anmeldenummer: 01100359.7
(22) Anmeldetag: 05.01.2001
(51) Int. Cl.: G01C 21/36

(54) **Verfahren zur Informationseingabe in ein elektrisches Gerät**
Method for inputting information into an electrical appliance
Méthode pour introduire de l'information dans un appareil électrique

(30) Priorität: 28.01.2000 DE 10003737
(43) Veröffentlichungstag der Anmeldung: 01.08.2001
(73) Patentinhaber: ROBERT BOSCH GMBH, 70442 Stuttgart (DE)
(72) Erfinder: Urban, Juergen, 31137 Hildesheim (DE); Kaiser, Matthias, 31141 Hildesheim (DE)

(56) Entgegenhaltungen:
- EP-A- 0 827 124
- CH-A- 658 760
- US-A- 5 748 512

## Beschreibung

### Stand der Technik

Die Erfindung geht von einem Verfahren zur Eingabe von aus mindestens einem Zeichen eines Alphabets bestehenden Informationen in ein elektrisches Gerät nach der Gattung des unabhängigen Patentanspruchs aus.

Es sind, beispielsweise von der Blaupunkt-Werke GmbH, Hildesheim, Fahrzeugnavigationsgeräte zum Betrieb in Kraftfahrzeugen bekannt, die nach Eingabe eines Fahrzielorts auf Grundlage von Karteninformationen eine Route von einem aktuellen Fahrzeugstandort, der beispielsweise durch Auswertung von GPS- (Global Positioning System)-Satellitensignalen bestimmt wird, zum Fahrzielort berechnen und den Fahrzeugführer mittels Fahranweisungen entlang der berechneten Route führen.

Zur Zielorteingabe sind aus der Literatur zahlreiche Verfahren bekannt, so beispielsweise die Markierung des Zielorts mittels eines steuerbaren Cursors auf einer Kartendarstellung oder die bei aktuellen Geräten der Blaupunkt-Werke GmbH angewandte buchstabenweise Eingabe des Zielortnamens.

Zur buchstabenweisen Zielorteingabe steht bei heutigen Geräten oftmals eine Blättertaste oder ein äquivalentes Eingabemittel zur Verfügung, mittels dessen die Buchstaben des Alphabets nacheinander aufrufbar sind. Ein aufgerufener Buchstabe wird durch eine Bestätigungstaste eingegeben. Um die Zielorteingabe zu vereinfachen und zu beschleunigen, wird ein unter dem Stichwort "ausgedünnter Speller" bekanntes Verfahren eingesetzt, bei dem das Alphabet auf solche Buchstaben reduziert wird, die im Zusammenhang mit einem oder mehreren zuvor eingegebenen Buchstaben einen in der zugrundeliegenden digitalen Kartenbasis gespeicherten Zielortnamen ergeben können.

EP-A-0 827 124 offenbart ein Verfahren zur Eingabe eines Zielortnamens an einem Fahrzeugnavigationssystem, bei dem der Benutzer zunächst einen oder mehrere Anfangsbuchstaben des Ortsnamens eingibt und auf Anforderung eine Namensliste erhält mit solchen Ortsnamen, die mit dem eingegebenen Buchstaben oder Buchstaben-String beginnen.

CH 658 760-A offenbart einen Telefon-Wählautomat. Zur Wahl einer Telefonnummer braucht vorerst die Buchstabentaste mit dem Anfangsbuchstabe eines Namens gedrückt zu werden. In den Zeilen einer Anzeige erscheinen in alphabetischer Reihenfolge die ersten gespeicherten Namen mit dem gewählten Anfangsbuchstabe. Befindet sich der gesuchte Namen nicht darunter, so braucht anschließend die nächste Buchstabe gedrückt zu werden, worauf in den Zeilen der Anzeige alle Namen mit den beiden ersten Buchstaben erscheinen.

### Vorteile der Erfindung

Das erfindungsgemäße Verfahren mit den Merkmalen des unabhängigen Patentanspruchs hat demgegenüber den Vorteil, dass die Eingabe einer Information in ein elektronisches Gerät, beispielsweise eines Zielortnamens in ein Fahrzeugnavigationsgerät, weiter vereinfacht und beschleunigt wird.

Bei dem erfindungsgemäßen Verfahren, bei dem nach Eingabe eines Zeichens eines Alphabets das Zeichen, oder für den Fall, dass vor dem eingegebenen Zeichen bereits ein oder mehrere Zeichen eingegeben worden sind, die aus den zuvor und dem zuletzt eingegebenen Zeichen gebildete Zeichenkette mit Informationen einer Vergleichsmenge von Informationen verglichen wird, und bei dem bei Übereinstimmung des Zeichens mit dem ersten Zeichen einer Information der Vergleichsmenge oder bei Übereinstimmung der Zeichenkette mit dem Beginn einer Information der Vergleichsmenge diese Information als einzugebende Information angeboten wird, wird dazu bei Ablehnung einer zur Eingabe angebotenen Information diese Information aus der Vergleichsmenge der Informationen gelöscht. Damit wird verhindert, dass eine bereits abgelehnte Information während desselben Eingabevorgangs erneut zur Eingabe angeboten wird. Die Ablehnung einer zur Eingabe angebotenen Information kann vorteilhafterweise durch Eingabe eines weiteren Zeichens des Alphabets erfolgen, so dass kein zusätzlicher Eingabeaufwand für beispielsweise einen Ablehnungsbefehl entsteht.

Eine weitere Beschleunigung der Informationseingabe ermöglicht eine geeignete Beschränkung der Vergleichsmenge von Informationen auf eine Teilmenge aller eingebbarer Informationen, beispielsweise auf eine vorgegebene Anzahl zuvor eingegebener Informationen.

Weiter ist es von Vorteil, wenn eine aus der Vergleichsmenge bestimmte, zur Eingabe angebotene Information mit allen Zeichen der Information dargestellt wird. Dies ermöglicht dem Benutzer eine Kontrolle seiner Eingabe dahingehend, ob eine einzugebende Information in der Vergleichsmenge für Informationen enthalten ist und damit das elektrische Gerät die einzugebende Information bereits aus den bis zu diesem Zeitpunkt eingegebenen Zeichen rekonstruieren kann, oder ob die Eingabe weiterer Zeichen erforderlich ist.

Eine weitere Verbesserung der Benutzerfreundlichkeit wird durch eine von den tatsächlich durch den Benutzer eingegebenen Zeichen optisch abgesetzte Darstellung der geräteseitig ergänzten Zeichen der zur Eingabe angebotenen Information erreicht.

Zeichnungen Ausführungsbeispiele der Erfindung sind in den Zeichnungen dargestellt und werden nachfolgend näher erläutert.

Es zeigen
Figur 1 ein Blockschaltbild des erfindungswesentlichen Teils eines Fahrzeugnavigationsgeräts als Beispiel für ein elektrisches Gerät zur Durchführung des erfindungsgemäßen Verfahrens,
Figuren 2A, 3A, 4A und 5A jeweils die Darstellung auf der Anzeigeeinheit des Navigationsgeräts in verschiedenen Situationen,
Figuren 2B, 3B, 4B und 5B den Inhalt eines zweiten Speichers des Fahrzeugnavigationsgeräts der Figur 1 und
Figur 6 ein Ablaufdiagramm des erfindungsgemäßen Verfahrens.

### Beschreibung der Ausführungsbeispiele

Das erfindungsgemäße Verfahren wird nachfolgend am Beispiel eines Verfahrens zur Eingabe eines Zielorts in ein Fahrzeugnavigationsgerät als elektrisches Gerät erläutert. Dies ist jedoch nicht im Sinne einer Einschränkung des Erfindungsgegenstandes auf den beschriebenen Anwendungsfall zu verstehen, vielmehr sind eine Vielzahl weiterer Anwendungsfälle, denkbar. So kann das erfindungsgemäße Verfahren beispielsweise auch zur Eingabe häufig genutzter Telefonnummern in ein Telekommunikationsendgerät, insbesondere ein stationäres oder Mobilfunktelefon, zum Eingeben häufig genutzter Textbestandteile einer SMS (Short Message Service: Über GSM-Mobilfunknetze versendbare Textnachricht vorgegebener Zeichenzahl), zur Eingabe von Befehlen oder sonstiger Informationen in einen PC (Personal Computer) und andere vergleichbare Anwendungsfälle genutzt werden, wobei das Alphabet, aus dem Zeichen zur Eingabe auswählbar sind, jeweils sinnvollerweise die und nur die als Bestandteile der eingebbaren Informationen benötigten Zeichen umfaßt.

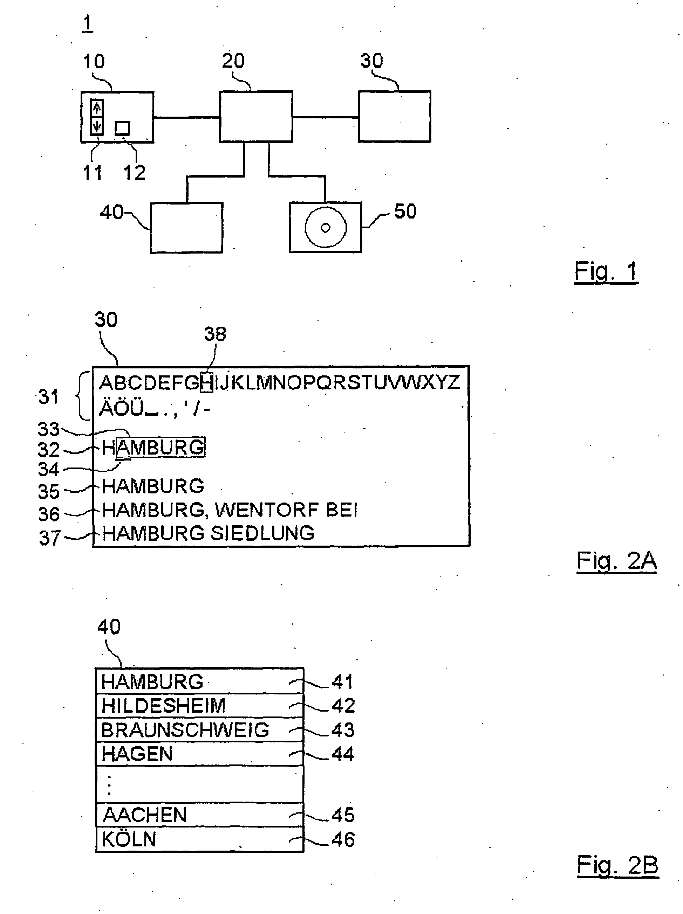

Figur 1 zeigt ein Fahrzeugnavigationsgerät 1 als Beispiel für ein elektrisches Gerät zur Durchführung des erfindungsgemäßen Verfahrens.

Zentraler Bestandteil des Fahrzeugnavigationsgeräts 1 ist eine Steuerung 20 zur Steuerung der Gerätefunktionen, insbesondere der Navigationsgerätefunktionen, nämlich der Berechnung einer Fahrtroute von einem aktuellen Fahrzeugstandort zu einem Fahrzielort aufgrund von Karteninformationen, die in einem angeschlossenen ersten, als Massenspeicher, vorzugsweise beispielsweise als CD-ROM-Leser mit eingelegter Kartendaten-CD-ROM, ausgeführten Speicher 50 abgelegt sind und der Ausgabe von Fahranweisungen in Abhängigkeit des aktuellen Fahrzeugstandorts relativ zu der berechneten Fahrtroute zur Leitung der Fahrzeugführers entlang der Fahrtroute. Weiter ist die Steuerung 20 zur Durchführung des nachfolgend beschriebenen erfindungsgemäßen Eingabeverfahrens ausgebildet.

Dazu ist an die Steuerung 20 eine Eingabeeinheit 10 angeschlossen, die über die zur Eingabe von Zeichen eines Alphabets und zur Erzeugung mindestens eines weiteren Befehls, nämlich eines Bestätigungsbefehls, erforderlichen Mittel verfügt. Die Eingabemittel sind beim vorliegenden Ausführungsbeispiel des erfindungsgemäßen Navigationsgeräts in Form einer Cursor-Steuertaste 11, mittels derer ein Cursor über einem auf einer Anzeigeeinheit 30 dargestellten Alphabet verschiebbar ist, und einer Bestätigungstaste 12 zur Eingabe eines mittels des Cursors ausgewählten Zeichens des dargestellten Alphabets, sowie zur Erzeugung eines Bestätigungsbefehls bei alleiniger Betätigung der Bestätigungstaste 12 ohne vorherige Verschiebung des Cursors ausgeführt. Der mittels der Bestätigungstaste erzeugte Bestätigungsbefehl kann, wie nachfolgend im Zusammenhang mit der Beschreibung des erfindungsgemäßen Verfahrens deutlich wird, kontextabhängig in verschiedener Weise durch das Betriebsprogramm der Steuerung 20, nämlich sowohl als Befehl zur Eingabe einer zur Eingabe angebotenen Information, aber auch als Fehlerkorrekturbefehl interpretiert werden.

Wie schon angedeutet, ist an die Steuerung 20 eine Anzeigeeinheit 30 angeschlossen, die wie später im Zusammenhang mit Figur 2A näher erläutert, einen ersten Bereich 31 aufweist, in dem für eine Eingabe verfügbaren Zeichen des Alphabets, im Fall der Zielortsnameneingabe für ein Fahrzeugnavigationsgerät also vorzugsweise die 26 Buchstaben des deutschen Alphabets zuzüglich der Umlaute "Ä", "Ö" und "Ü", eines Leerzeichens, sowie Sonderzeichen, die üblicherweise in Ortsnamen verwendet werden, dargestellt sind. Diese sind durch Betätigung der Cursortaste 11 durch Verschieben des Cursors 38 über dem dargestellten Alphabet markier- und durch Betätigung der Bestätigungstaste 12 auswählbar. Weiter weist die Anzeigeeinheit 30 einen zweiten Bereich auf, in dem die zur Eingabe angebotenen Informationen, im vorliegenden Fall der Navigationszielortsnameneingabe also Ortsnamen, darstellbar sind. Eine dargestellte Information ist durch Eingabe eines Bestätigungsbefehls eingebbar.

An die Steuerung 20 sind weiter ein erster und ein zweiter Speicher 50 und 40 angeschlossen.

Der erste Speicher 50 ist, wie bereits angedeutet, als Massenspeicher, beispielsweise als CD-ROM-Lesegerät mit eingelegter Daten-CD-ROM, ausgelegt und beinhaltet die Menge aller in das elektrische Gerät eingebbaren Informationen. Im vorliegenden Fall des Fahrzeugnavigationsgeräts beinhaltet der erste Speicher Karteninformationen, die Orte mit Koordinaten und Namen sowie Verbindungen, nämlich Verkehrswege, vorzugsweise in Form von durch Kraftfahrzeuge nutzbaren Straßen, zwischen den Orten, beispielsweise ergänzt durch Attribute wie auf den Straßen höchstzulässige Geschwindigkeiten, umfassen. Die eingebbaren Informationen sind in diesem Fall beispielsweise die Ortsnamen als Zielorte für die Berechnung einer Fahrtroute.

Der zweite Speicher 40 ist derart ausgelegt, dass er eine Teilmenge der im ersten Speicher 50 enthaltenen Informationen enthält. Diese Informationsteilmenge ist die im Zusammenhang mit dem nachfolgend beschriebenen Verfahren erwähnte Vergleichsmenge von Informationen, mit deren Elementen eingegebene Zeichen oder Zeichenketten erfindungsgemäß verglichen werden.

Bei einer ersten Ausführungsform eines erfindungsgemäß arbeitenden Navigationsgeräts enthält der Speicher eine vorgegebene Anzahl der zuletzt eingegebenen Navigationszielorte, also beispielsweise die letzten 20 Ziele.

Bei einer zweiten Ausführungsform kann dagegen der zweite Speicher 40 beispielsweise eine vorgegebene Anzahl der in einem vorgegebenen zurückliegenden Zeitraum am häufigsten eingegebenen Informationen enthalten.

Bei einer dritten Ausführungsform kann der zweite Speicher alle oder alle in einem vorgegebenen zurückliegenden Zeitraum eingegebenen Informationen enthalten.

Eine vierte Ausführungsform sieht schließlich vor, dass der zweite Speicher 40 alle im ersten Speicher 50 enthaltenen, eingebbaren Informationen, im vorliegenden Fall eines Fahrzeugnavigationsgeräts also beispielsweise alle in der Kartenbasis enthaltenen Ortsnamen, enthält.

Die Menge der im zweiten Speicher 40 verfügbaren Informationen, also der Umfang der Vergleichsmenge, wird sinnvollerweise nach dem durch das erfindungsgemäße Verfahren vorrangig zu erreichende Ziel definiert. Im Falle der ersten genannten Ausführungsform sind beispielsweise die zuletzt eingegebenen Navigationsziele besonders schnell auswählbar, jedoch ergibt sich für abweichende Navigationsziele, die nicht in der Vergleichsmenge enthalten sind, der im wesentlichen gleiche Eingabeaufwand, wie für Eingabeverfahren nach dem Stand der Technik. Demgegenüber wird der Eingabeaufwand nach der vierten Ausführungsform für die zuletzt eingegebenen Ziele steigen, jedoch für anderweitige Zielorte geringer, als nach dem Stand der Technik ausfallen.

Eine andere Wahl der Vergleichsmenge von Informationen ist je nach bevorzugter Zielsetzung, die durch das erfindungsgemäße Verfahren erreicht werden soll, denkbar und möglich.

Figur 2A zeigt beispielhaft die auf der Anzeigeeinheit 30 des Navigationsgeräts dargestellten Informationen. Ein erster, im vorliegenden Fall aus zwei Zeilen bestehender Abschnitt 31 dient der Darstellung des Alphabets, aus dem Zeichen zur Eingabe auswählbar sind. Im vorliegenden Fall einer Zielorteingabe für ein Fahrzeugnavigationsgerät umfasst das Alphabet die üblichen sechsundzwanzig Buchstaben des deutschen Alphabets, die Umlaute "Ä", "Ö" und "Ü", ein Leerzeichen, sowie Sonderzeichen, die üblicherweise in Ortsnamen verwendet werden. Ein mittels der Steuertaste 11 verschiebbarer Cursor 38 dient der Markierung eines einzugebenden Zeichens aus dem dargestellten Alphabet.

In einem zweiten Abschnitt der Anzeigeeinheit 30 sind das eingegebene Zeichen 32, im dargestellten Fall der Buchstabe "H", oder für den Fall, dass vor dem zuletzt eingegebenen Zeichen bereits Zeichen eingegeben worden sind, die aus den zuvor eingegebenen Zeichen und dem zuletzt eingegebenen Zeichen gebildete Zeichenkette 32 dargestellt. Das Zeichen 32 oder die Zeichenkette ist für den Fall, dass das Zeichen mit dem ersten Zeichen einer in der Vergleichsmenge von Informationen, im vorliegenden Fall also der Vergleichsmenge von Zielorten, oder die Zeichenkette 32 mit den ersten Buchstaben einer Information der Vergleichsmenge übereinstimmt, durch ein oder mehrere Zeichen 33 zu der übereinstimmenden Information ergänzt. Im dargestellten Fall ist beispielsweise der Zielort "HAMBURG" in der Vergleichsmenge enthalten, so dass die Eingabe "H" zum vollständigen Zielortsnamen "HAMBURG" ergänzt wird. Die Ergänzung 33 ("AMBURG") ist dabei, vorzugsweise durch farbliche Hinterlegung oder durch abweichende Schriftfarbe, von dem oder den eingegebenen Zeichen 32 optisch abgesetzt dargestellt. Ein Weiterer Cursor 34 markiert die Position der dargestellten Zeichenkette, an der das nächste Zeichen eingegeben werden kann.

Ein dritter Bereich der Anzeigeeinheit 30 ist zur Anzeige einer Liste 35, 36, 37 von in der digitalen Karte zu dem aktuell im zweiten Abschnitt dargestellten Zielort 32, 33 oder der bislang eingegebenen Zeichenkette 32 verfügbaren Zielorten vorgesehen. Im Falle des nach Benutzereingabe des Buchstabens "H" zur Eingabe angebotenen Zielorts "HAMBURG" sind dies die Zielorte "HAMBURG", "HAMBURG, WENTORF BEI" und "HAMBURG SIEDLUNG", wobei diese Liste je nach verfügbarem Datenaufkommen nicht vollständig im dritten Abschnitt der Anzeigeeinheit 30 darstellbar ist. So wäre zum potentiellen Zielort "HAMBURG" beispielsweise auch der weitere Eintrag "HAMBURGERDEICH" verfügbar, der aus Platzgründen nicht dargestellt ist.

Figur 2B zeigt beispielhaft die in dem zweiten Speicher 40 des Fahrzeugnavigationsgeräts abgelegte Vergleichsmenge von Zielorten, die beispielsweise die zuletzt eingegebenen 20 Zielorte umfaßt, von denen hier nur die ersten vier Einträge 41 "HAMBURG", 42 "HILDESHEIM", 43 "BRAUNSCHWEIG", 44 "HAGEN", sowie die letzten beiden Einträge 45 "AACHEN" und 46 "KÖLN" dargestellt sind. Die Einträge sind nach ihrem Alter, also nach dem Zeitpunkt der letzten Eingabe als Zielort in das Fahrzeugnavigationsgerät, sortiert gespeichert, wobei der älteste Eintrag an der letzten Position steht.

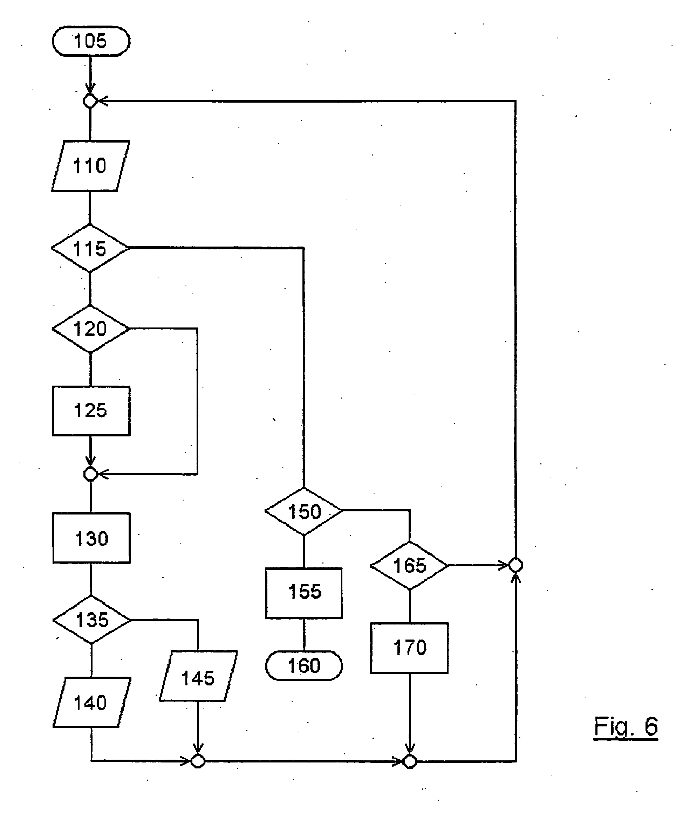

Das erfindungsgemäße Verfahren wird nachfolgend am Beispiel einer Eingabe eines Zielorts in das Fahrzeugnavigationsgerät 1 der Figur 1 als elektrischem Gerät unter Zuhilfenahme des Ablaufdiagramms der Figur 6 sowie der Figuren 2A bis 5A und 2B bis 5B erläutert.

Die Informationseingabe beginnt mit Schritt 105 in Figur 6. In Schritt 110 wird eine Eingabe durch den Benutzer erwartet. Diese Eingabe kann zum einen die Eingabe eines Zeichens aus dem im ersten Abschnitt 31 der Anzeigeeinheit 30 dargestellten verfügbaren Alphabet, zum anderen die Eingabe eines Bestätigungsbefehls sein.

Die Eingabe eines Zeichens des verfügbaren Alphabets erfolgt beim vorliegenden Ausführungsbeispiel durch Verschieben des Cursors 38, der beispielsweise in Form einer farblichen Hinterlegung oder einer von den übrigen Zeichen des Alphabets abweichenden Schriftfarbe des aktuell markierten Zeichens ausgeführt ist, mittels der Cursor-Steuertaste 11 der Bedieneinheit 10 auf das einzugebende Zeichen, also beispielsweise den Buchstaben "H", und anschließende Betätigung der Bestätigungstaste 12.

In Schritt 115 erfolgt eine Überprüfung der Eingabe dahingehend, ob es sich bei der Eingabe um eine Zeicheneingabe oder um die Eingabe eines Bestätigungsbefehls handelt. Im vorliegenden Fall der Eingabe des Buchstabens "H", also eines Zeichens des Alphabets, verzweigt der Ablauf zu Schritt 120, wo überprüft wird, ob bereits eine vollständige Information, also im vorliegenden Fall des Fahrzeugnavigationsgeräts ein vollständiger Zielortsname zur Eingabe angeboten wurde. Dies wäre für den Benutzer daran zu erkennen, dass im zweiten Abschnitt der Anzeigeeinheit 30 ein vollständiger Ortsname stünde. Da "H" der erste eingegebene Buchstabe ist, zuvor also noch kein Buchstabe eingegeben worden ist, zeigt die Anzeigeeinheit zum Zeitpunkt 120 des Ablaufplans noch keinen vollständigen Ortsnamen an, es wird also noch kein Ortsname zur Eingabe angeboten.

Somit verzweigt der Ablauf zu Schritt 130, in dem das eingegebene Zeichen, hier also "H", mit dem ersten Zeichen der im zweiten Speicher 40 abgelegten Einträge, also der Informationen der Vergleichsmenge von Informationen, verglichen wird. In Schritt 135 wird die Übereinstimmung des eingegebenen Zeichens des Alphabets, nämlich des Buchstaben "H", mit einer Information der Vergleichsmenge der Informationen, nämlich dem Eintrag 41 "HAMBURG" des zweiten Speichers 40 festgestellt. Da eine Übereinstimmung festgestellt worden ist, werden erfindungsgemäß die weiteren Elemente der Vergleichsmenge nicht weiter auf Übereinstimmungen mit dem eingegebenen Zeichen überprüft. Aufgrund der festgestellten Übereinstimmung wird in Schritt 140 hinter dem tatsächlich eingegebenen Zeichen 32, also "H", die Ergänzung 33, also "AMBURG", optisch von dem eingegebenen Zeichen "H" abgesetzt ausgegeben, und somit das eingegebene Zeichen zu einer vollständigen Information, die zur Eingabe angeboten wird, ergänzt.

Der Inhalt der Anzeigeeinheit 30 nach Schritt 140 ist in Figur 2A dargestellt. Der Cursor 38 steht auf dem zuletzt eingegebenen Zeichen "H" des angebotenen Alphabets im ersten Abschnitt der Anzeigeeinheit 30. Im zweiten Abschnitt ist das eingegebene Zeichen 32, nämlich der Buchstabe "H", ergänzt durch die farblich abgesetzte Ergänzung "AMBURG", also insgesamt der Zielortname "HAMBURG" dargestellt. Im dritten Abschnitt ist schließlich zumindest ein Auszug aus der Liste der zu dem angebotenen Zielort "HAMBURG" angebotenen Navigationsziele, die im Beginn ihres Ortsnamens den Namensbestandteil "HAMBURG" enthalten, dargestellt.

Der Ablauf wird mit Schritt 110 fortgesetzt, wo erneut eine Eingabe durch den Benutzer erwartet wird. Diese kann wiederum in der Eingabe eines weiteren Buchstaben in der beschriebenen Weise oder der Eingabe eines Bestätigungsbefehls für die zur Eingabe angebotene Information, im vorliegenden Fall also den Ortsnamen "HAMBURG", bestehen. Wird nun in Schritt 110 durch alleiniges Betätigen der Bestätigungstaste 12 ohne vorheriges Betätigen der Cursor-Steuerungstaste ein Bestätigungsbefehl eingegeben, was in Schritt 115 festgestellt wird, so verzweigt der Ablauf zu Schritt 150.

In Schritt 150 wird überprüft, ob aktuell ein in der Kartenbasis enthaltener Ortsname zur Eingabe angeboten wird, ob also im zweiten Abschnitt der Anzeigeeinheit 30 ein in der im ersten Speicher 50 abgelegten Kartenbasis enthaltener Ortsname entweder als eingegebene Zeichenkette 32 oder als Kombination eines eingegebenen Buchstaben 32 oder einer aus mehreren eingegebenen Buchstaben gebildeten Zeichenkette und einer Ergänzung 33 angezeigt wird. Im vorliegenden Fall der Figur 2A wird aktuell der Ortsname "HAMBURG" zur Eingabe angeboten und der durch Betätigung der Bestätigungstaste 12 ausgelöste Bestätigungsbefehl als Befehl zur Eingabe des angebotenen Ortsnamens "HAMBURG" interpretiert. In Schritt 155 wird somit der angebotene Ortsname "HAMBURG" als Navigationszielort in das Fahrzeugnavigationsgerät übernommen und die Eingabe des Zielortnamens in Schritt 160 beendet.

Wird in Schritt 110 statt eines Bestätigungsbefehls ein weiteres Zeichen des Alphabets, beispielsweise der Buchstabe "A", eingegeben, was in Schritt 115 festgestellt wird, so wird erfindungsgemäß davon ausgegangen, dass die auf der Anzeigeeinheit zur Eingabe angebotene Information, deren Vorhandensein in Schritt 120 festgestellt wird, nicht der vom Benutzer gewünschten einzugebenden Information entspricht. Gemäß einem bevorzugten Ausführungsbeispiel der Erfindung ist es daher vorgesehen, dass die durch Eingabe eines weiteren Buchstaben anstelle eines Bestätigungsbefehls abgelehnte Information, im Beispiel der Figur 2A also der Ortsname "HAMBURG", in Schritt 125 aus der Vergleichsmenge der Informationen gelöscht wird. Dies geschieht beim vorliegenden Ausführungsbeispiel durch Markierung des abgelehnten Ortsnamens mittels eines Verbots-Flags, das die zugeordnete Information für weitere Vergleichsoperationen sperrt und damit faktisch für den vorliegenden Eingabevorgang aus der Vergleichsmenge der Informationen löscht. Es handelt sich dabei um eine temporäre Löschung, so dass die Vergleichsmenge für einen neuen Eingabevorgang im ursprünglichen Umfang zur Verfügung steht, wobei nun aber beispielsweise der zuletzt eingegebene Zielort den ältesten Eintrag vor dem letzten Eingabevorgang ersetzt hat.

Anschließend geht der Ablauf zu Schritt 130 über, wo die bis zu diesem Zeitpunkt eingegeben Zeichenkette 32, die nun aus den beiden Buchstaben "H" und "A" besteht, mit den ersten beiden Buchstaben der oder zumindest eines Teils der Elemente der Vergleichsmenge verglichen wird. Nach Vergleich mit den ersten beiden Einträgen 42, "HILDESHEIM", und 43, "BRAUNSCHWEIG" - der Eintrag 41, "HAMBURG" ist durch Setzen des Verbots-Flags aus der Vergleichsmenge gelöscht - wird eine Übereinstimmung der eingegebenen Zeichenkette 32, nämlich "HA", mit dem dritten 44 Element der Vergleichsmenge, nämlich dem Eintrag "HAGEN" ermittelt (Schritt 135) und somit die im zweiten Abschnitt der Anzeigeeinheit dargestellte eingegebene Zeichenketten "HA" zum Ortsnamen "HAGEN" ergänzt (Schritt 140).

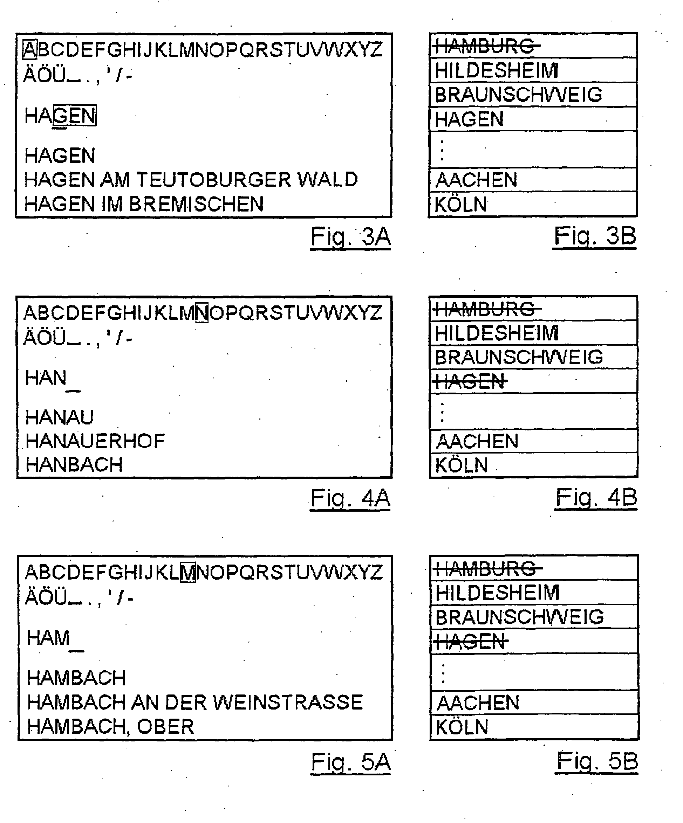

Die Situation zu Beginn des sich erneut anschließenden Eingabeschritts 110 ist in den Figuren 3A und 3B dargestellt. Die Anzeigeeinheit 30 zeigt in ihrem zweiten Abschnitt die zur Eingabe angebotene Information, nämlich den Ortsnamen "HAGEN", bestehend aus den tatsächlich eingegebenen ersten beiden Zeichen 32, "H" und "A" und der optisch abgesetzten Ergänzung "GEN". Im dritten Abschnitt sind die in der Kartenbasis enthaltenen Ortsnamen aufgeführt, die mit dem Namensbestandteil "HAGEN" beginnen. Im zweiten Speicher des Fahrzeugnavigationsgeräts ist der mit Eingabe des Buchstabens "A" abgelehnte, zuvor zur Eingabe angebotene Ortsname "HAMBURG" durch ein Verbots-Flag von weiteren Vergleichsoperationen im Rahmen des laufenden Eingabevorgangs ausgeschlossen, was durch die Durchstreichung symbolisiert wird.

Wird im nun folgenden Eingabeschritt 110 ein Bestätigungsbefehl durch alleiniges Betätigen der Bestätigungstaste 12 erzeugt, was in Schritt 115 geprüft wird, so wird in im Zusammenhang mit dem Ortsnamen "HAMBURG" beschriebener Weise der Ortsname "HAGEN" als Navigationszielort in das Fahrzeugnavigationsgerät übernommen (Schritte 150, 155) und der Eingabevorgang beendet (Schritt 160).

Wird hingegen in Schritt 110 ein weiteres Zeichen, beispielsweise der Buchstabe "N", eingegeben, so wird auch in beschriebener Weise die zuvor zur Eingabe angebotene Information, nämlich der Ortsname "HAGEN", aus der Vergleichsmenge gelöscht (Schritte 115, 120, 125). Anschließend wird die bis zu diesem Zeitpunkt eingegebene Zeichenkette, nun bestehend aus den zuvor eingegebenen Buchstaben "H" und "A", sowie dem gerade eingegebenen Buchstaben "N", auf eine Übereinstimmung der Zeichenkette mit einem Element der Vergleichsliste überprüft, wobei die Einträge 41 und 44, nämlich "HAMBURG" und "HAGEN" nicht mehr zur Verfügung stehen.

Da eine Übereinstimmung der eingegebenen Zeichenkette mit dem Beginn einer Information der Vergleichsmenge nicht festgestellt werden kann (Schritte 130, 135), wird in Schritt 145 die bisher eingegebene Zeichenkette 32 "HAN" im zweiten Abschnitt der Anzeigeeinheit, nun allerdings ohne Ergänzung 33, dargestellt.

Die Situation nach Eingabe des Buchstaben "N" ist in den Figuren 4A und 4B dargestellt. Der weitere Cursor 34 ist hinter dem letzten eingegebenen Zeichen, also hier nach dem Buchstaben "N", positioniert und markiert die nächste Stelle zur Eingabe eines weiteren Zeichens. Im dritten Abschnitt der Anzeigeeinheit 30 ist eine Liste der in der Kartenbasis verfügbaren Ortsnamen angegeben, deren Ortsnamen mit den eingegebenen Zeichen, also der Zeichenkette "HAN" beginnen, im vorliegenden Fall also "HANAU", "HANAUERHOF" und "HANBACH". Im zweiten Speicher 40 sind die Informationen "HAMBURG" und "HAGEN" durch jeweils ein Verbots-Flag von weiteren Vergleichsoperationen ausgeschlossen, was durch die Durchstreichungen angedeutet ist.

Wird statt des Zeichens "N" in Schritt 110 ein weiteres Zeichen, beispielsweise der Buchstabe "M", eingegeben, so wird auch in beschriebener Weise die zuvor zur Eingabe angebotene Information, nämlich der Ortsname "HAGEN", aus der Vergleichsmenge gelöscht (Schritte 115, 120, 125). Anschließend wird die bis zu diesem Zeitpunkt eingegebene Zeichenkette, nun bestehend aus den zuvor eingegebenen Buchstaben "H" und "A", sowie dem gerade eingegebenen Buchstaben "M", auf eine Übereinstimmung der Zeichenkette mit einem Element der Vergleichsliste überprüft, wobei die Einträge 41 und 44, nämlich "HAMBURG" und "HAGEN" wegen ihrer Löschung aus der Vergleichsliste nicht mehr zur Verfügung stehen

Da eine Übereinstimmung der eingegebenen Zeichenkette mit dem Beginn einer Information der Vergleichsmenge nicht festgestellt werden kann (Schritte 130, 135), wird in Schritt 145 die bisher eingegebene Zeichenkette 32 im zweiten Abschnitt der Anzeigeeinheit, nun allerdings ohne Ergänzung 33, dargestellt.

Diese Situation ist in den Figuren 5A und 5B dargestellt. Der weitere Cursor 34 ist hinter dem letzten eingegebenen Zeichen positioniert und markiert die nächste Stelle zur Eingabe eines weiteren Zeichens. Im dritten Abschnitt der Anzeigeeinheit 30 ist eine Liste der in der Kartenbasis verfügbaren Ortsnamen angegeben, deren Ortsnamen mit den eingegebenen Zeichen, also der Zeichenkette "HAM" beginnen, im vorliegenden Fall also "HAMBACH", "HAMBACH AN DER WEINSTRASSE" und "HAMBACH, OBER". Im zweiten Speicher 40 sind die Informationen "HAMBURG" und "HAGEN" durch jeweils ein Verbots-Flag von weiteren Vergleichsoperationen ausgeschlossen.

Werden in dieser Situation nun beispielsweise die weiteren Buchstaben "B", "A", "C" und "H" in der beschriebenen Weise eingegeben und im darauffolgenden Eingabeschritt ein Bestätigungsbefehl erzeugt, so wird aufgrund der Tatsache, dass "HAMBACH" ein in der Kartenbasis enthaltener Ortsname ist, dieser als Navigationszielort in das Fahrzeugnavigationsgerät übernommen und der Eingabevorgang beendet (Schritte 115, 150, 155, 160).

Wird beispielsweise nach Eingabe der drei Zeichen "H", "A" und "N" in Schritt 110 ein Bestätigungsbefehl eingegeben, wird diese Eingabe in Schritt 115 geprüft und der Ablauf verzweigt aufgrund des Bestätigungsbefehls zu Schritt 150.

In Schritt 150 wird festgestellt, dass die bis zu dem Bestätigungsbefehl eingegebene Zeichenkette, bestehend aus den Zeichen "H", "A" und "N" keinem in der Kartenbasis enthaltenen Ortsnamen entspricht. Der Ablauf wird somit in Schritt 165 fortgesetzt.

In Schritt 165 wird überprüft, ob die bislang eingegebene Zeichenkette überhaupt schon Zeichen des Alphabets enthält. Enthält die Zeichenkette noch kein Zeichen des Alphabets, dies kann beispielsweise nach versehentlichem Erzeugen eines Bestätigungsbefehls zu Beginn des Eingabevorgangs auftreten, so wird der Ablauf mit dem Eingabeschritt 110 fortgesetzt, in dem eine Zeicheneingabe durch den Benutzer erwartet wird.

Wird in Schritt 165 hingegen festgestellt, dass die bislang eingegebene Zeichenkette bereits mindestens ein Zeichen enthält, dies ist nach Eingabe der Zeichen "H", "A" und "N" der Fall, wird der Bestätigungsbefehl als Korrekturbefehl interpretiert und in Schritt 170 das zuletzt eingegebene Zeichen, im vorliegenden Fall also der Buchstabe "N" aus der Zeichenkette gelöscht. Außerdem wird eine aufgrund der Eingabe des letzten Buchstaben, hier also "N", vorgenommene Beschränkung der Vergleichsmenge der Informationen rückgängig gemacht. Dies bedeutet im konkret vorliegenden Fall, dass das aufgrund der Eingabe des Buchstaben "N" aus der Vergleichsmenge gelöschte Element "HAGEN" wieder in die Vergleichsmenge aufgenommen und als Information in beschriebener Weise zur Eingabe angeboten wird. Anschließend geht der Ablauf erneut zum Eingabeschritt 110 über. Es ergibt sich somit die beschriebene Situation der Figuren 3A und 3B, es wird also das Element "HAGEN" der Vergleichsmenge zur Eingabe angeboten, im zweiten Speicher 40 ist lediglich das Element "HAMBURG" von weiteren Vergleichsoperationen ausgenommen.

Ist der Name des Zielorts wie oben beschrieben eingegeben, kann die Eingabe des Navigationsziels beispielsweise mit der Eingabe des Straßennamens, und bei langen Straßen zusätzlich der Hausnummer, des Navigationsziels fortgesetzt werden. Dazu ist das Alphabet, also die Menge der eingebbaren Zeichen, auf die in Straßennamen und Hausnummern vorkommenden Zeichen beschränkt. Im vorliegenden Fall umfaßt das Alphabet also beispielsweise die bereits für die Zielortsnameneingabe verfügbaren Zeichen zuzüglich der Ziffern 0 bis 9. Die Eingabe des Straßennamens und gegebenenfalls der Hausnummer des Navigationsziels kann dann analog oben beschriebener Vorgehensweise erfolgen.

Nachfolgend wird ein zweites Ausführungsbeispiel des erfindungsgemäßen Eingabeverfahrens beschrieben, das sich von dem ersten durch die durch Eingabe eines Bestätigungsbefehls ausgelösten Abläufe unterscheidet, hinsichtlich der Ergänzung eingegebener Zeichen zu vollständigen auswählbaren Informationen und der Eingabe oder Ablehnung der angebotenen Informationen jedoch mit dem ersten Ausführungsbeispiel übereinstimmt.

Nach Eingabe eines ersten Buchstaben erscheint dieser im zweiten Abschnitt der Anzeigeeinheit 30, und wird, sofern in der Vergleichsmenge ein Eintrag mit passendem Anfangsbuchstaben enthalten ist, um die fehlenden Zeichen zu diesem Eintrag ergänzt. Nach Eingabe von "H" steht also im zweiten Abschnitt der Anzeigeeinheit 30 also der in der Vergleichsmenge enthaltenen Ortsname "HAMBURG". Im dritten Abschnitt der Anzeigeeinheit 30 wird eine Liste 35 bis 37 von in der Kartenbasis des ersten Speichers 50 enthaltenen Ortsnamen, die mit dem im zweiten Abschnitt angezeigten Namensbestandteil beginnen, dargestellt. Im vorliegenden Fall sind dies alle in der Kartenbasis enthaltenen Einträge, die mit "HAMBURG" beginnen, also "HAMBURG", "HAMBURG, WENTORF BEI" und "HAMBURG SIEDLUNG" und gegebenenfalls weitere mit "HAMBURG" beginnende Einträge (Figur 2A).

Ist im zweiten Abschnitt ein vollständiger Ortsname dargestellt, der in der Kartenbasis als Ortsname enthalten ist, so bewirkt die Eingabe eines Bestätigungsbefehls mittels der Bestätigungstaste 12 die Auswahl der im dritten Abschnitt der Anzeigeeinheit 30 dargestellten Liste 35 bis 37 von Zielorten.

Äußeres Anzeichen für die Auswahl dieser Ortsliste ist das Springen des weiteren Cursors 34 auf den ersten Eintrag dieser Liste. Der weitere Cursor 34 ist nun mittels der Blättertaste 11 innerhalb der Ortsliste 35 bis 37 verschiebbar, wobei dann, wenn der weitere Cursor 34 das obere oder untere Ende des im dritten Abschnitt der Anzeigeeinheit 30 dargestellten Teils der Liste erreicht hat, gegebenenfalls weitere Eintäge der Liste im dritten Abschnitt der Anzeigeeinheit anstelle der zuvor angezeigten Einträge dargestellt werden. Ein Eintrag der Ortsliste 35 bis 37 wird durch Markieren mittels des weiteren Cursors 34 und erneutes Betätigen der Bestätigungstaste als Navigationszielort ausgewählt und in das Fahrzeugnavigationsgerät 1 eingegeben.

Wird hingegen nach Eingabe des Buchstaben "H" ein weiterer Buchstabe, beispielsweise "A" eingegeben, so wird der zuvor als auswählbare Information angebotene Eintrag "HAMBURG" aus der Vergleichsmenge der Informationen für diesen Eingabevorgang gelöscht. Wird in der Vergleichsmenge ein weiterer Eintrag mit den Anfangsbuchstaben "H" und "A", im vorliegenden Fall also der Ortsname "HAGEN" ermittelt, wird dieser im zweiten Abschnitt, eine zugehörige Ortsnamenliste 35 bis 37 mit allen mit "HAGEN" beginnenden Einträgen, also "HAGEN", "HAGEN AM TEUTOBURGER WALD", "HAGEN IM BREMISCHEN" usw. im dritten Abschnitt der Anzeigeeinheit 30 dargestellt (Figur 3A). Die Eingabe eines Eintrags der Liste als Navigationszielort oder die Ablehnung des angebotenen Ortsnamen geschieht wie beschrieben durch Erzeugung eines Bestätigungsbefehls und anschließend Auswahl eines Listeneintrags oder durch Eingabe eines weiteren Zeichens.

Für den Fall, dass im zweiten Abschnitt der Anzeigeeinheit 30 kein vollständiger in der Kartenbasis enthaltener Ortsname angezeigt wird, weil in der Vergleichsmenge kein Element mit passendem oder passenden Anfangsbuchstaben existiert, erscheint im dritten Abschnitt der Anzeigeeinheit 30 eine, vorzugsweise alphabetisch sortierte, Liste 35 bis 37 solcher Ortsnamen, die mit den bis dahin eingegebenen und im zweiten Abschnitt der Anzeigeeinheit 30 dargestellten Buchstaben 32 beginnen. Im Beispiel der Figur 5A wird beispielsweise im dritten Abschnitt der Anzeigeeinheit 30 nach Eingabe der Buchstaben "H", "A" und "M" eine Liste 35 bis 37 aller in der Kartenbasis enthaltener Ortsnamen angezeigt, die mit den Buchstaben "H", "A" und "M" beginnen. Demnach umfaßt die im dritten Abschnitt der Anzeigeeinheit 30 zumindest teilweise angezeigte Ortsnamenliste beispielsweise, wie in Figur 5A dargestellt, die Einträge "HAMBACH", "HAMBACH AN DER WEINSTRASSE", "HAMBACH, OBER" und, sofern vorhanden, weitere Einträge mit den Anfangsbuchstaben "H", "A" und "M".

Wird in dieser Situation - es ist mindestens ein Zeichen eingegeben, jedoch ist im zweiten Abschnitt der Anzeigeeinheit 30 kein in der Kartenbasis enthaltener Ortsname dargestellt - ein Bestätigungsbefehl durch Betätigen der Bestätigungstaste 12 erzeugt, so springt der weitere Cursor 34 auf den ersten Eintrag 35 der im dritten Abschnitt der Anzeigeeinheit 30 dargestellten Ortsnamenliste, im Beispiel der Figur 5A also auf den Eintrag "HAMBACH", von wo er zur Markierung eines auszuwählenden Navigationszielorts mittels der Blättertaste 11 in beschriebener Weise über die Einträge der Liste 35 bis 37 verschoben werden kann. Ist der gewünschte Zielortname in der Liste markiert, wird er durch Erzeugen eines Bestätigungsbefehls als Navigationszielort in das Fahrzeugnavigationsgerät eingegeben.

Nach Abschluß des Eingabevorgangs werden alle eingegebenen Zeichen gelöscht und gegebenenfalls aus der Vergleichsmenge gelöschte Einträge wieder in diese aufgenommen, im Falle des beschriebenen Verbots-Flags dieses zurückgesetzt.

Weiter wird, sofern die Vergleichsmenge eine vorgegebene Anzahl zuletzt eingegebener Zielorte umfaßt, der älteste Eintrag durch den zuletzt eingegebenen Zielort ergänzt.

## Patentansprüche

1. Verfahren zur Eingabe von aus mindestens einem Zeichen eines Alphabets bestehenden Informationen in ein elektrisches Gerät,
wobei nach Eingabe eines Zeichens des Alphabets das Zeichen, oder für den Fall, dass vor dem eingegebenen Zeichen bereits ein oder mehrere Zeichen eingegeben worden sind, die aus den zuvor und dem zuletzt eingegebenen Zeichen gebildete Zeichenkette mit Informationen einer Vergleichsmenge von Informationen verglichen wird,
und wobei bei Übereinstimmung des Zeichens mit dem ersten Zeichen einer Information der Vergleichsmenge oder bei Übereinstimmung der Zeichenkette mit dem Beginn einer Information der Vergleichsmenge diese Information als einzugebende Information angeboten wird, **dadurch gekennzeichnet, dass** eine zur Eingabe angebotene Information abgelehnt werden kann,
wobei bei Ablehnung einer zur Eingabe angebotenen Information diese Information aus der Vergleichsmenge der Informationen gelöscht wird, so dass die abgelehnte Information während der laufenden Informationseingabe nicht erneut zur Eingabe angeboten wird.

2. Verfahren nach Anspruch 1, **dadurch gekennzeichnet, dass** eine zur Eingabe angebotene Information durch Eingabe eines weiteren Zeichens des Alphabets abgelehnt wird.

3. Verfahren nach einem der vorstehenden Ansprüche, **dadurch gekennzeichnet, dass** die Vergleichsmenge von Informationen eine Teilmenge gespeicherter eingebbarer Informationen umfaßt.

4. Verfahren nach einem der vorstehenden Ansprüche, **dadurch gekennzeichnet, dass** die Vergleichsmenge von Informationen bei Eingabe eines ersten Zeichens eine vorgegebene Anzahl zuvor eingegebener Informationen umfaßt

5. Verfahren nach einem der vorstehenden Ansprüche, **dadurch gekennzeichnet, dass** eine aus der Vergleichsmenge bestimmte, zur Eingabe angebotene Information mit allen Zeichen der Information dargestellt wird.

6. Verfahren nach Anspruch 5, **dadurch gekennzeichnet, dass** die tatsächlich eingegebenen Zeichen der angebotenen Informationen optisch, vorzugsweise farblich, abgesetzt von den übrigen Zeichen der angebotenen Information dargestellt werden.

## Claims

1. Method for inputting information comprising at least one character from an alphabet into an electrical appliance,
where input of a character from the alphabet is followed by the character, or, if one or more characters have already been input before the character which is input, the character string formed from the previously input and the last input character, being compared with information from a comparison set of information,
and where if there is a match between the character and the first character in a piece of information from the comparison set or if there is a match between the character string and the start of a piece of information from the comparison set then this information is offered as the information to be input, **characterized in that** a piece of information offered for input can be rejected, and if a piece of information offered for input is rejected then this information is deleted from the comparison set of information, so that the rejected information is not offered for input again during the current input of information.

2. Method according to Claim 1, **characterized in that** a piece of information offered for input is rejected by inputting a further character from the alphabet.

3. Method according to one of the preceding claims, **characterized in that** the comparison set of information comprises a subset of stored information which can be input.

4. Method according to one of the preceding claims, **characterized in that** the comparison set of information comprises a prescribed number of previously input information items when a first character is input.

5. Method according to one of the preceding claims, **characterized in that** a piece of information which is offered for input and which is determined from the comparison set is shown with all the characters in the information.

6. Method according to Claim 5, **characterized in that** the actually input characters in the offered information are shown in visual, preferably colour-based, detachment from the rest of the characters in the offered information.

## Revendications

1. Procédé pour entrer des informations composées d'au moins un signe d'un alphabet dans un appareil électrique selon lequel :
après l'entrée d'un signe de l'alphabet, au cas où préalablement à ce signe un ou plusieurs signes auraient été introduits, on compare la chaîne de signes formée par les signes introduits en dernier lieu, à des informations d'une quantité de comparaison formée d'informations, et
en cas de concordance entre le signe avec le premier signe d'une information de la quantité de comparaison ou en cas de concordance de la chaîne de signes avec le début d'une information de la quantité de comparaison, on propose cette information comme information à entrer,
**caractérisé en ce que**
l'on peut refuser une information proposée comme entrée,
le refus d'une information proposée comme entrée effaçant cette information de la quantité de comparaison d'informations pour que l'information rejetée ne soit plus proposée à nouveau pendant l'entrée d'informations en cours.

2. Procédé selon la revendication 1,
**caractérisé en ce qu'**
une information proposée comme entrée est rejetée par l'entrée d'un autre signe de l'alphabet.

3. Procédé selon l'une quelconque des revendications précédentes,
**caractérisé en ce que**
la quantité de comparaisons des informations comprend une quantité partielle d'informations introduites et enregistrées en mémoire.

4. Procédé selon l'une quelconque des revendications précédentes,
**caractérisé en ce que**
la quantité de comparaisons d'informations à l'entrée d'un premier signe comprend un nombre prédéfini d'informations introduites préalablement.

5. Procédé selon l'une quelconque des revendications précédentes,
**caractérisé par**
une information venant de la quantité de comparaisons définie, offerte pour l'entrée est présentée avec tous les signes de l'information.

6. Procédé selon la revendication 5,
**caractérisé en ce que**
les signes effectivement entrés des informations offertes sont représentés optiquement de préférence en couleur, de façon détaillée par rapport aux autres signes de l'information offerte.
